# EUROPÄISCHE PATENTSCHRIFT

(11) **EP 0 899 933 B1**
(45) Veröffentlichungstag und Bekanntmachung des Hinweises auf die Patenterteilung: **08.03.2006**
(21) Anmeldenummer: 98114520.4
(22) Anmeldetag: 03.08.1998
(51) Int. Cl.: H04M 15/00, H04M 3/42

(54) **Verfahren und Schaltungsanordnung zur Nutzung von Telekommunikationsnetzwerken**
Method and circuit for using telecommunications networks
Procédé et circuit pour l'utilisation de réseaux de télécommunication

(30) Priorität: 27.08.1997 DE 19737255
(43) Veröffentlichungstag der Anmeldung: 03.03.1999
(60) Teilanmeldung: 05019210.3
(73) Patentinhaber: Deutsche Telekom AG, 53113 Bonn (DE)
(72) Erfinder: Herling, Wolfgang Dipl.-Ing., 53773 Hennef (DE)

(56) Entgegenhaltungen:
- EP-A- 0 452 591
- US-A- 5 511 113
- US-A- 5 640 505
- FALGUIERES A ET AL: "AUTOMATISATION DE L'ACQUISITION DES DONNEES DESTINEES A LA FACTURATION DES SERVICES" COMMUTATION ET TRANSMISSION, SOTELEC. PARIS, FR, Bd. 10, Nr. 3, 1988, Seiten 19-28, XP000024765 ISSN: 0242-1283

## Beschreibung

Die Erfindung betrifft ein Verfahren und eine Schaltungsanordnung zur Nutzung von Telekommunikationsnetzwerken für die Zwecke von Diensteanbietern nach dem Oberbegriff des Patentanspruchs 1 bzw. des Patentanspruchs 9.

Bei den bisher bekanntgewordenen Verfahren bzw. Schaltungsanordnungen zur Nutzung von Telekommunikationsnetzwerken, insbesondere für die Zwecke von Diensteanbietern bzw. für die getrennte Verrechnung von Verbindungsleistungen für Verbindungen, die zwei oder mehr Telekommunikationsnetze nutzen, ist die Verwendung einer besonderen Zugangskennzahl Voraussetzung. Der Funkrufdienst, zum Beispiel Telmi der Deutschen Funkruf GmbH wird durch Wahl der besonderen Zugangskennzahl 0166 erreicht. Andere Beispiele sind die Zeitansage mit der besonderen Zugangszahl 01191, der T-Online-Dienst der Deutschen Telekom mit 01910 und andere. Die besonderen Zugangskennzahlen werden in Deutschland vom Bundesministerium für Post und Telekommunikation verwaltet und beginnen derzeit alle mit einer Ziffernfolge 01. Unter dem Titel "Der Wettbewerb nimmt gestalt an": Kennzahlen für Verbindungsnetzbetreiber und Rufnummern für Telefonauskunftsdienste im BMPT vergeben, werden in der telekom/praxis 7-97 entsprechende Rufnummern vorgestellt und beschrieben.

Verbindungen mit einer besonderen Zugangskennzahl werden besonders tarifiert, das heißt der Kunde, der eine Verbindung mit einer besonderen Zugangskennzahl wählt, bezahlt einen anderen Preis nach einem anderen Preisschema als der Kunde, der eine normale Verbindung nach dem Schema Ortsnetzkennzahl/Nummer des Zielanschlusses im Ortsnetz wählt.

Während bei einer "normalen" Verbindung nach dem Schema Ortsnetzkennzahl/Nummer des Zielanschlusses im Ortsnetz ausschließlich die Leistung des Telekommunikationsnetzes, nämlich die Verbindungsleistung dem Anrufer mittels Fernmelderechnung in Rechnung gestellt wird, wird bei besonderen Zugangskennzahlen neben der Leistung des Telekommunikationsnetzes auch die nachgefragte Dienstleistung, zum Beispiel die Wetterauskunft, der Preis für die Aussendung eines Funkrufes oder dergleichen in Rechnung gestellt. Dabei bleiben die Zusammenhänge dem unwissenden Anrufer verborgen. Aber auch der wissende Anrufer wird nicht erfahren, welchen Anteil des Gesamtgeldes für eine konkrete Verbindung mit einer besonderen Zugangskennzahl für die Transportleistung und welcher Anteil für die eigentliche nachgefragte/beauftragte Dienstleistung, das ist zum Beispiel der Preis für eine Wetterauskunft, der Preis für die Aussendung eines Funkrufes u.s.w., angefallen ist. Die Verrechnung und Aufteilung des Gesamtentgeltes wird zwischen dem Betreiber des Telekommunikationsnetzes und dem Diensteanbieter vorgenommen.

Besondere Zugangskennzahlen sind ein knappes Gut, das von der Regulierungsbehörde für Telekommunikation und Post(RegTP)restriktiv verwaltet wird bzw. verwaltet werden muss. Nur für wichtige Dienstleistungen werden besondere Zugangskennzahlen vergeben, da die Anzahl begrenzt ist. Es sind jedoch zum Beispiel Auskunftsdienstleistungen denkbar, die von der Regulierungsbehörde für Telekommunikation und Post(RegTP)keine besondere Zugangskennzahlen erhalten und daher bisher keine Chance zur Verwirklichung hatten und haben.

Aus der EP-A-0 452 591 ist ein Verfahren zum Betrieb eines Gebührenberechnungssystems zur Belastung eines Anrufers mit Gebühren, die während eines vom Anrufer gewählten und über ein Kommunikationsnetzwerk zu einer von einem Sponsor bereitgestellten Nummer geführten Anrufs aufgetreten sind, bekannt.

Der Erfindung liegt die Aufgabe zugrunde, ein Verfahren und eine Schaltungsanordnung zur Nutzung von Telekommunikationsnetzwerken für die Zwecke von Diensteanbietern und für die getrennte Verrechnung von Verbindungsleistungen für Verbindungen zu schaffen, die zwei oder mehrere Telekommunikationsnetze nutzen, um die technische Möglichkeit für die Erschliessung neuer Märkte für die Erbringung von Dienstleistungen über ein Telekommunikationsnetz realisieren zu können und wodurch es möglich wird, dass Dienstleistungen, die bisher keine besonderen Zugangskennzahlen erhalten konnten und können, nunmehr ohne weiteres realisiert werden können.

Die erfindungsgemäße Lösung für das Verfahren ist im Kennzeichen des Patentanspruchs 1 charakterisiert. Weitere Lösungen bzw. Ausgestaltungen des erfindungsgemäßen Verfahrens sind in den Kennzeichen der Patentansprüche 2 bis 8 charakterisiert.

Die erfindungsgemäße Lösung für die Schaltungsanordnung, die zur Durchführung des Verfahrens dient, ist im Kennzeichen des Patentanspruchs 9 charakterisiert. Weitere Ausgestaltungen bzw. Lösungen für die erfindungsgemäße Schaltungsanordnung sind in den Patentansprüchen 10 bis 14 charakterisiert.

Das vorgeschlagene Verfahren und die vorgeschlagene Schaltungsanordnung ermöglichen
1. das Anbieten von Dienstleistungen ohne Verwendung einer besonderen Zugangskennzahl. Das heißt mit anderen Worten, daß mit einer "normalen" Rufnummer nach dem Schema Ortsnetzkennzahl/Nummer des Zielanschlusses im Ortsnetz gewählt werden kann und nicht mit einer besonderen Zugangskennzahl.
2. Getrennte Aufstellungen über die vom Anrufer in Anspruch genommene Verbindungsleistung des Telekommunikationsnetzes und der von ihm nachgefragten Dienstleistungen, wie zum Beispiel Wetterauskünfte, Börsenauskünfte u.s.w..

Dadurch ist es zum Beispiel möglich, daß nunmehr alle Auskunftsdienstleistungen, die vom BMPT keine besonderen Zugangskennzahlen erhalten, mit Hilfe der erfindungsgemäßen Lösung für das Verfahren und für die Schaltungsanordnung realisiert werden können.

Beispielsweise ist ein Informationsdienst "örtliche Sonderangebote für Lebensmittel" vorstellbar. Der Dienstleistungsanbieter verkauft die Information über aktuelle Sonderangebote mittels Verbindungen an Kunden: Der Kunde wählt die "ganz normale" Rufnummer des Diensteanbieters, die nach dem Schema ortsnetzkennzahl/Nummer des Zielanschlusses gebildet wird. Die vorgeschlagene Schaltungsanordnung wertet diesen Anruf aus und ermöglicht es, daß dem Kunden die Auskunft "Sonderangebote" unabhängig und separat von der ebenfalls in Anspruch genommenen Verbindungsleistung im Telekommunikationsnetz in Rechnung gestellt wird.

Es soll hier betont werden, daß es selbstverständlich auch möglich ist, das vorgeschlagene Verfahren bzw. die vorgeschlagene Schaltungsanordnung auch für besondere Zugangskennzahlen zu nutzen. Dies erscheint dann sinnvoll, wenn dem Kunden getrennte Rechnungen für Verbindungsleistungen und für in Anspruch genommene Dienstleistungen gestellt werden müssen.

Die Erfindung wird nun anhand von in der Zeichnung dargestellten Ausführungsbeispielen näher erklärt.

In der Beschreibung, in den Patentansprüchen, in den Zeichnungen und in der Zusammenfassung werden die in der Liste für Bezugszeichen verwendeten Bezugszeichen und Begriffe verwendet.

In der Zeichnung bedeuten:
- Fig. 1: eine Schaltungsanordnung zur Nutzung eines Telekommuniktionsnetzwerkes für die Zwecke von Diensteanbietern und für die getrennte Verrechnung von Verbindungsleistungen für Verbindungen, die zwei oder mehr Telekommunikationsnetze nutzen und
- Fig. 2: eine Schaltungsanordnung mit mehreren miteinander verbundenen Telekommunikationsnetzen.

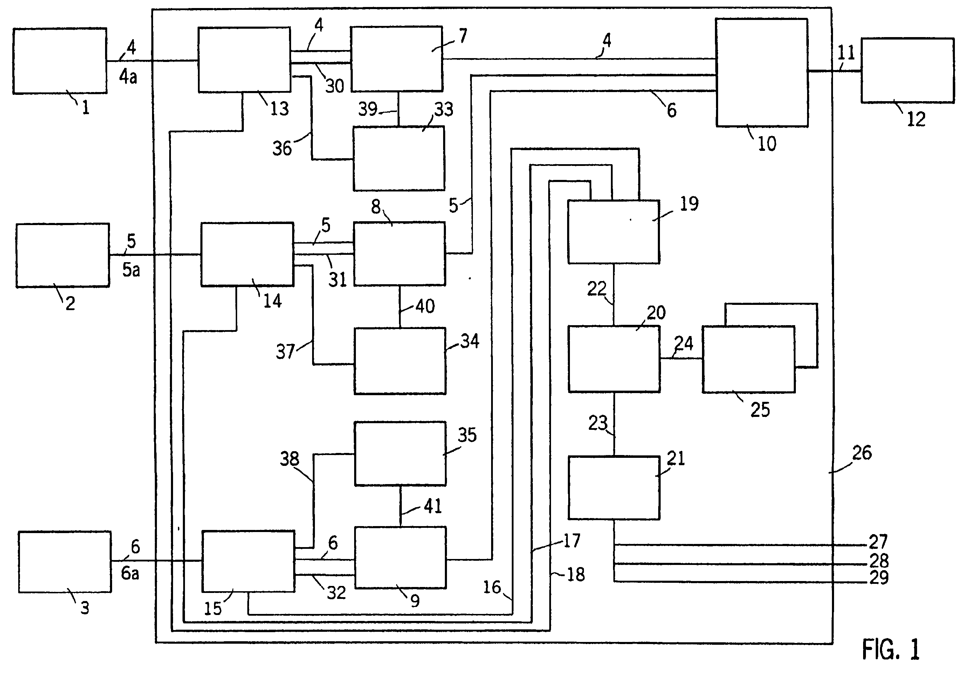

Vor der Beschreibung von drei Anwendungsbeispielen wird zunächst die Schaltungsanordnung nach Fig. 1 beschrieben. Die mit 1, 2 bzw. 3 bezeichneten Kästchen sind Endgeräte, zum Beispiel ISDN-Telefone, von denen Verbindungen 4, 5 bzw. 6 über Anschlüsse des Telekommunikationsnetzes 4a, 5a bzw. 6a, zur Zieleinrichtung 12 im Telekommunikationsnetz 26 ausgelöst werden. Die von 7 bis 9 gekennzeichneten Kästchen in der Schaltung sind Einrichtungen des Telekommunikationsnetzes 26, die die von den Endgeräten 1 bis 3 ausgelöste Verbindungsaufträge 4 bis 6 entgegennehmen, herstellen und tarifieren. Das mit 10 gekennzeichnete Kästchen ist eine Einrichtung des Telekommunikationsnetzes 26, an die der Zielanschluß 11 angeschaltet ist. Über den Zielanschluß 11 werden die Verbindungen 4 bis 6 zur Zieleinrichtung 12 geleitet. Die Zieleinrichtungen 12 sind einem Diensteanbieter zugeordnet, zu der die ankommenden Verbindungen 4-6 geleitet werden. Zwischen die Endgeräte 1-3 und den Einrichtungen 7-9 des Telekommunikationsnetzes 26 sind nun Filterschaltungen 13-15 geschaltet, die alle Verbindungen zu der Zieleinrichtung 12 erkennen und deren charakterisierende Daten (Ursprungsanschluß, Zielanschluß, Datum, Beginn- und Ende-Uhrzeit) zwecks Registrierung an eine Registrier-/Sortiereinrichtung 19 weiterleiten. Die Filtereinrichtungen 13-15 sind mit einer Sperrfunktion ausgestattet, die Verbindungen von einem eindeutig bestimmten Ursprungsanschluß zu kostenpflichtigen Dienstleistungszielen unterbinden. Zwischen den Filtereinrichtungen 13-15 und der Registrier-/Sortiereinrichtung 19 liegen Datenwege 16-18. Die Filtereinrichtungen 13-15 können entweder einzeln oder über eine nicht dargestellte gemeinsame zentrale Eingabestelle programmiert werden. Die Registrier-/Sortiereinrichtung 19 nimmt eine Sortierung aller von den Filtereinrichtungen 13-15 übermittelten Verbindungsdaten nach Ursprungsanschlüssen 4a-6a vor. Der Registrier-/Sortiereinrichtung 19 ist eine Zuordnungseinrichtung 20 nachgeschaltet, die die Kundenanschriften für alle von der Registrier-/Sortiereinrichtung 19 aufgeführten Ursprungsanschlüsse 1-3 bei der/den Kunden-Anschlußdaten-bank(en) 25 nachfragt. Die Kundenanschlußdatenbank(en) 25 beinhaltet bzw. beinhalten die Kundenadressen für alle Ursprungsanschlüsse 4a-6a. Der Zuordnungseinrichtung 20 ist eine Ausgabeeinrichtung 21 nachgeschaltet, die nach Kundenanschriften sortiert und alle über einen Ursprungsanschluß 4a-6a erfolgte Verbindungen 4-6 mit den für eine Rechnungsstellung erforderlichen Daten (Kundenanschrift; Ursprungsanschluß; Datum, Beginn und Ende einer jeden Verbindung) auflistet. Datenwege 22-24 zwischen der genannten Registrier-/Sortiereinrichtung 19, der Zuordnungseinrichtung 20, der Ausgabeeinrichtung 21 und der/den Kunden-Anschlußdatenbank(en) 25 dienen der Verbindung der genannten Einrichtungen. Die Kunden-Anschlußdatenbank(en) 25 speichert bzw. speichern für alle Ursprungsanschlüsse 4a bis 6a die Kundenadressen. Der mit 27 bezeichnete Ausgang der Ausgabeeinrichtung 21 soll den Versand der von der Ausgabeeinrichtung 21 erstellten Listen per Briefpost an den Diensteanbieter symbolisch darstellen.

Desweiteren soll der mit 28 gekennzeichnete Ausgang der Ausgabeeinrichtung 21 den Versand der von der Ausgabeeinrichtung 21 erstellten Listen mittels elektronischer Post an den Diensteanbieter darstellen und der mit 29 gekennzeichnete Ausgang die Wahrnehmung des Inkassos durch den Telekommunikationsnetzbetreiber im Auftrag des Diensteanbieters.

Es folgt nun das erste Beispiel, das sowohl die Operationsfolge des Verfahrens als auch die Wirkungsweise der Schaltung näher erklärt.

Einem Kunden A gehört ein Telefon, welches als Endeinrichtung 1 in Fig. 1 zu sehen ist, über das der Kunde A die Rufnummer eines Diensteanbieters wählt, das heißt die Herstellung der Verbindung veranlaßt.

Die Endeinrichtung 1 in Form eines Telefons ist über den Telefonanschluß 4a an das Telekommunikationsnetz 26 angeschaltet.

Es wird angenommen, daß der Telefonanschluß in Neuss eingerichtet ist und die Telefonnummer 02131/1234567 hat.

Der Anschluß des Diensteanbieters 11 soll in diesem Beispiel in Düsseldorf liegen und die Rufnummer 0211/9876543 haben.

Zunächst wählt der Kunde A die Rufnummer 0211/9876543 und erfährt vom Diensteanbieter die nachgefragte, kostenpflichtige Information (zum Beispiel lokale Kinoansage, lokale Sonderangebote, ...). Die Verbindung 4 wird von der Einrichtung 7 des Telekommunikationsnetzes 26 lediglich für die vom Telekommunikationsnetz 26 bereitgestellte Verbindungsleistung, nicht jedoch für die Entgeltung des Diensteanbieters tarifiert. Die Filtereinrichtung 13 ist daraufhin programmiert, alle Verbindungen, die die Zielkennzahl 0211/9876543 haben, zu erkennen und die Verbindungsdaten Datum, Anfangs- und Endzeitpunkt sowie die Nummer des Anschlusses, von dem diese Verbindung initialisiert worden ist, zur Registrier-/Sortiereinrichtung 19 zu übertragen. Die Registrier-/Sortiereinrichtung 19 ordnet alle Verbindungen zum Ziel 0211/9876543 nach den Ursprungsanschlüssen, von welchen die Anrufe ausgegangen sind. Die nach Ursprungsanschlüssen geordnete(n) Verbindungsliste(n) wird/werden an die Zuordnungseinrichtung 20 weitergeleitet. Die Zuordnungseinrichtung 20 fragt für jeden Ursprungsanschluß den Namen des Anschlußkunden und dessen Rechnungsanschrift bei der/den Kunden-Anschlußdatenbank(en) 25 nach. Die so vervollständigte Liste wird an die Ausgabeeinrichtung 21 übertragen.

Die Ausgabeeinrichtung 21 hält die vollständigen Listen zu nachfolgend aufgeführten weiteren Verwendungen an den Ausgängen 27-29 vor.
- Übersendung der Listen per Brief an den Diensteanbieter, der anhand dieser Listen, dem Kunden A die nachgefragte, kostenpflichtige Informationsleistung in Rechnung stellt,
- Übersendung der Listen per elektronischer Post an den Diensteanbieter, der anhand dieser Listen, dem Kunden A die nachgefragte, kostenpflichtige Informationsleistung in Rechnung stellt,
- Erbringung einer Inkassoleistung des Telekommunikationsnetzbetreibers im Auftrag des Diensteanbieters.

Bei der Verwendung "Inkassoleistung" stellt der Telekommunikationsdiensteanbieter die nachgefragten, kostenpflichtigen Informationsleistungen getrennt aufgeführt, aber zusammen mit dem Rechnungsbetrag für die vom Kunden A in Anspruch genommenen, im Telekommunikationsnetz 26 erbrachten Verbindungsleistungen in Rechnung. Der vom Telekommunikationsnetzbetreiber vom Kunden A inkassierte Betrag für die kostenpflichtigen Informationleistungen wird an den Diensteanbieter überwiesen.

Es folgt nun das Beispiel Nr. 2.

Einem Kunden A* gehört ein Telefon, welches als Endeinrichtung 2 in Fig. 1 dargestellt ist.

Der Kunde A* wählt die Rufnummer eines Diensteanbieters und veranlaßt so die Herstellung der Verbindung 5 im Telekommunikationsnetz 26.

Die Endeinrichtung 2 in Form eines Telefons ist über den Telefonanschluß 5a an das Telefonkommunikationsnetz 26 angeschaltet. Der Telefonanschluß 5a ist in Düsseldorf eingerichtet und hat die Rufnummer 0211/1234567.

Der Anschluß des Diensteanbieters 11 ist in Düsseldorf geschaltet und hat die Rufnummer 0211/9876543.

Zunächst wählt der Kunde A* die Rufnummer 9876543 und erfährt vom Diensteanbieter 11 die nachgefragte kostenpflichtige Information (zum Beispiel lokale Kinoansage, lokale Sonderangebote, u.s.w.). Die Verbindung 5 wird von der Einrichtung 7 des Telekommunikationsnetzes 26 lediglich für die bereitgestellte, vom Telekommunikationsnetz 26 erbrachte Verbindungsleistung, nicht jedoch für die Entgeltung des Diensteanbieters 11 tarifiert.

Die Filtereinrichtung 13 ist so programmiert, daß alle Verbindungen, die die Zielkennzahl 0211/9876543 haben, erkannt werden und die Verbindungsdaten Datum, Anfangs- und Endzeitpunkt sowie von welchem Anschluß diese Verbindung initialisiert worden ist, zur Sortiereinrichtung 19 übertragen werden. Die Filtereinrichtung 13 erkennt, wenn Verbindungen von Anschlüssen 4-6 generiert werden, die sich im gleichen räumlichen Bereich des Telekommunikationsnetzes 26 befinden wie der Zielanschluß 11. In solchen Fällen stellt die Filtereinrichtung 13 automatisch die bereichsidentifizierende Ziffernfolge (hier 0211; im Telefonnetz der Deutschen Telekom ist diese Ziffernfolge mit "Ortskennzahl" bezeichnet) der vom Kunden A* gewählten Ziffernfolge voran. Der weitere Operationsablauf bzw. Verfahrensablauf erfolgt wie im Beispiel 1 bereits beschrieben wurde.

Im nachfolgenden wird nun ein Beispiel 3 beschrieben.

Ein Kunde A** ist Gast in einem Hotel und wählt von einem Hoteltelefon (Einrichtung 3) die Rufnummer eines Diensteanbieters.

Dem Hoteleigentümer würden als Kunde des Anschlusses 6a entsprechend dem unter Beispiel 1 beschriebenen Ablauf alle kostenpflichtigen Informationsdienstleistungen in Rechnung gestellt, die von seinen Hotelgästen nachgefragt worden sind. Daher möchte der Hotelbesitzer verhindern, daß Verbindungen 6 über den von ihm gemieteten Anschluß 6a zu kostenpflichtigen Dienstleistungszielen möglich sind.

Alle Diensteanbieter, die kostenpflichtige Dienste über das Telekommunikationsnetz 26 anbieten, müssen dies dem Telekommunikationsnetzbetreiber mitteilen, damit dieser die entsprechenden Zielrufnummern in den Filtereinrichtungen 13-15 einstellt. Dem Telekommunikationsnetzbetreiber liegt damit eine vollständige Liste der kostenpflichtigen Informationsdienste und sonstige Dienste vor. Die Filtereinrichtungen 13-15 erkennen die Ursprungsanschlüsse 4a-6a, von denen die Anrufe ausgehen. Eine Sperrfunktion in den Filtereinrichtungen 13-15 ermöglicht es, daß Verbindungen von bestimmten Ursprungsanschlüssen 4a-6a zu allen oder zu bestimmten kostenpflichtigen Zielrufnummern im Telekommunikationsnetz 26 nicht durchgeschaltet werden. Meldet der Hotelbesitzer, daß er es nicht wünscht, daß über den Anschluß 6a Verbindungen zu kostenpflichtigen Zielen hergestellt werden können, aktiviert der Telekommunikationsnetzbetreiber bis auf Widerruf die Sperrfunktion in der Filtereinrichtung 15. Der Kunde A** wird nicht mit dem Diensteanbieter verbunden.

Die Aktivierung der Sperrfunktion erscheint auch sinnvoll für Anschlüsse, an die öffentliche Telefonstellen angeschaltet sind. Desweiteren kann auch der Diensteanbieter wünschen, daß von einem bestimmten Anschluß 4a-6a aus keine Verbindungen zu seiner Dienstleistung möglich sind. Dies ist dann der Fall, wenn der Inhaber des Ursprungsanschlusses 4a oder 5a wiederholt nachgefragte und erbrachte, in Rechnung gestellte, kostenpflichtige Dienstleistungen nicht bezahlt hat. In diesen Fällen wird die Sperrfunktion in den Filtereinrichtungen 13-15 auf Mitteilung des Diensteanbieters vom Telekommunikationsnetzbetreiber aktiviert. Andere Ziele können von den so betroffenen Ursprungsanschlüssen weiter erreicht werden.

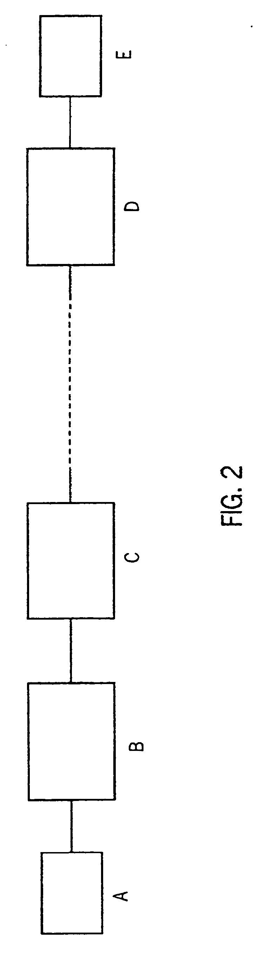

Im nachfolgenden wird anhand der Fig. 2 die getrennte Verrechnung von Verbindungsleistungen für Verbindungen, die zwei oder mehr Telekommunikationsnetze nutzen, detailiert erklärt.

Im Prinzip kommt die gleiche Schaltungsanordnung wie nach Fig. 1 zur Anwendung, nur handelt es sich bei der Zieleinrichtung 12 nicht um die Einrichtung eines Diensteanbieters, sondern um ein weiteres Telekommunikationsnetz C, D, .... In der Fig. 2 ist der Kunde A dargestellt, der eine Verbindung über mehrere Telekommuniktionsnetze B, C, ... D zum Ziel E veranlaßt. Das erste an der Gesamtverbindung beteiligte Telekommuniktionsnetz ist mit B bezeichnet und das zweite mit C. Mit D ist ein weiteres an der Gesamtverbindung beteiligtes Telekommunikationsnetz bezeichnet, wobei prinzipiell davon ausgegangen werden kann, daß zwischen C und D noch andere Telekommunikationsnetze angeordnet sind, die an der Gesamtverbindung beteiligt sind. Mit E ist eine Senke der vom Kunden A verursachten Verbindung bezeichnet, wobei E auch ein Diensteanbieter sein kann. Ist zum Beispiel das zweite, dritte, ... Telekommunikationsnetz C, ... D so ausgestattet wie das Telekommunkationsnetz 26 nach Fig. 1, dann kann jede Leistung eines einzelnen, an einer Verbindung beteiligten Telekommunikationsnetzes B-D erfaßt werden. Der Gesamtpreis für die Verbindung errechnet sich additiv aus den Einzelleistungen der beteiligten Telekommunikationsnetze.

Mit der vorgeschlagenen Schaltungsanordnung bzw. mit dem vorgeschlagenen Verfahren wird jeder einzelne Telekommuniktionsnetzbetreiber in die Lage versetzt, dem Verursacher der Verbindung (Anrufer) seinen Verbindungsanteil genau in Rechnung zu stellen.

Wird ein federführender Telekommunikationsnetzbetreiber administrativ bestimmt, der dem Anrufer die Gesamtverbindungsleistung in Rechnung stellt, so kann auf Basis der nunmehr vorliegenden Daten eine Verrechnung zwischen den Telekommuniktionsnetzbetreibern erfolgen. Das vorgeschlagene. Verfahren bzw. die Schaltungsanordnung zur Durchführung des Verfahrens ermöglicht eine individuelle Preisfestlegung/Bestimmung jeder einzelnen, für eine zusammengesetzte Gesamtleistung erforderliche Teilleistung, sei es Verbindungsleistung oder kostenpflichtige Informationsleistung. Damit werden Abrechnungsverfahren zwischen allen an einer Telekommunikationsverbindung beteiligten Unternehmungen und dem Endkunden durchgängig transparent und nachvollziehbar.

In den bisher geschilderten Anwendungsbeispielen dient die Filtereinrichtung 13-15 dazu, Verbindungen zu Zielrufnummern, die vorher in die Filtereinrichtung 13-15 eingegeben worden sind, herauszufiltern, damit in Folge neben der Tarifierung der Verbindungsleistung getrennt eine Bepreisung einer Zusatzleistung (Funkruf, Wetterauskunft, ...) ermöglicht wird, so daß dem anrufenden Kunden beide Preispositionen getrennt in Rechnung gestellt werden können. An der Tarifierung der Verbindungsleistung, die in den Einrichtungen 7-9 vorgenommen wird, ändert sich durch die Einbringung der Filtereinrichtung 13-15 nichts.

Wird die Filtereinrichtung 13-15 jedoch zusätzlich mit einer Tarifierungsfunktionalität ausgestattet, eröffnen sich neue Möglichkeiten der Verbindungstarifierung. Im geschilderten ersten Beispiel ist der Fall angenommen worden, daß der Ursprungsanschluß in Neuss eingerichtet ist und der Zielanschluß in Düsseldorf. Die Verbindungsleistung wird nach Entfernungskriterien bestimmt. Im hier angenommenen Fall kostet die Verbindungsleistung wenig, weil die Entfernung Neuss - Düsseldorf klein ist. Wird der Zielanschluß in Düsseldorf beispielsweise von einem in Hamburg geschalteten Ursprungsanschluß angerufen, wäre der Preis für die Verbindungsleistung aufgrund der größeren Entfernung Hamburg - Düsseldorf höher.

Das Einbringen von Tarifierungsfunktionalitäten in die Filtereinrichtung ermöglicht das Unabhängigwerden von der Entfernungsabhängigkeit. Bislang wird für entfernungsunabhängige Verbindungstarifierung ebenfalls eine besondere Zugangskennzahl beginnend mit der Ziffernfolge 01 benötigt.

Besondere Zugangskennzahlen beginnend mit der Ziffernfolge 01 kommen bisher immer dann zur Anwendung, wenn entweder neben der Verbindungsleistung eine zusätzliche Leistung in Rechnung gestellt wird und/oder wenn entfernungsunabhängige Tarifierung gewollt ist.

Im folgenden wird der Fall der entfernungsunabhängigen Tarifierung behandelt.

Gegenwärtig bietet zum Beispiel die Deutsche Telekom über die Zugangskennzahl 01113 den Service "Telekom Direkt - Ihr Ansprechpartner für Kritik, Anregungen und Fragen" an. Im Zusammenhang mit der Deregulierung der Telekommunikation ist wahrscheinlich, daß die einprägsame Ziffernfolge 01113 ersetzt werden wird durch eine vielstellige Rufnummer mit der Struktur 0800-XYZ-1133. Es wäre von Vorteil wenn eine weniger Stellen aufweisende Zugangskennzahl zu wählen wäre, beispielsweise 040-1113.

Die Ziffernfolge 040 ist identisch mit der Ortsnetzkennzahl von Hamburg. Das heißt wählt zum Beispiel ein Anrufer die Ziffernfolge 040, so bezahlt er einen entfernungsabhängigen Tarif der in den Einrichtungen 7-9 für eine Verbindung Ort der Verbindungsentstehung - Hamburg eingestellt ist. Aufgrund des Service-Charakters des Serviceanbieters soll die Verbindungstarifierung aber kostenfrei sein.

Wird die Filtereinrichtung 13-15 mit einer Tarifierungsfunktionalität ausgestattet, so kann sie, wenn beispielsweise die Ziffernfolge 0401113 eingegeben ist, über Tarifierungssignalwege 30-32 den Einrichtungen 7-9 signalisieren, daß eine gewählte Verbindung 040-1113 von den Einrichtungen 7-9 nicht zu tarifieren ist. Stattdessen übernimmt die Filtereinrichtung 13-15 die Verbindungstarifierung. Mit der der Filtereinrichtung 13-15 zur Verfügung gestellten Tarifierungsfunktionalität, können folgende Verbindungstarifierungen vorgenommen werden:
- kostenlose Tarifierung beliebiger Zugangskennzahlen/Rufnummern unabhängig von Verbindungsdauer und unabhängig von der Verbindungsentfernung
- Festpreis für eine Verbindung mit beliebiger Zugangskennzahl/Rufnummer, unabhängig von Verbindungdauer und unabhängig von der Verbindungsentfernung
- Zeitabhängige Verbindungstarifierung beliebiger Zugangskennzahlen/Rufnummern, abhängig von Verbindungsdauer, unabhängig von der Verbindungsentfernung
- Kombination Festpreis für eine Verbindung mit beliebiger Zugangskennzahl/Rufnummer, unabhängig von Verbindungsdauer und unabhängig von der Verbindungsentfernung, plus zeitabhängige Verbindungstarifierung, abhängig von Verbindungsdauer, unabhängig von der Verbindungsentfernung.

Die im konkreten Verbindungsfall zur Anwendung kommende Tarifierung wird der Einrichtung 33-35, die die weiteren Arbeiten zur Inrechnungstellung der Verbindung übernimmt bzw. veranlaßt, über Datenweg 36-38 von der Filtereinrichtung 13-15 übermittelt.

### Liste der Bezugszeichen

- 1-3: Einrichtungen bzw. Endgeräte (von Kunden)
- 4-6: Verbindungen (im Telekommunikationsnetz)
- 4a-6a: Anschlüsse (des Telekommunikationsnetzes)
- 7-9: Einrichtungen zum Entgegennehmen, Herstellen und Tarifieren ausgelöster Verbindungsaufträge
- 10: Einrichtung, an die der Zielanschluß angeschaltet ist
- 11: Zielanschluß
- 12: Zieleinrichtung eines Diensteanbieters
- 13-15: Filtereinrichtungen
- 16-18: Datenwege
- 19: Registrier-/Sortiereinrichtung
- 20: Zuordnungseinrichtung
- 21: Ausgabeeinrichtung
- 22-24: Datenwege
- 25: Kundenanschlußdatenbank(en)
- 26: Telekommunikationsnetz
- 27-29: Ausgänge der Ausgabeeinrichtung
- 30-32: Tarifierungssignalwege
- 33-35: Einrichtungen zur Inrechnungstellung
- 36-38: Datenwege
- 39-41: Datenwege
- A, A*, A**: Kunde(n)
- B-D: Telekommunikationsnetze (an der Gesamtverbindung beteiligt)
- E: Diensteanbieter oder Senke der vom Kunden verursachten Verbindung

## Patentansprüche

1. Verfahren zur Nutzung von Telekommunikationsnetzwerken für die Zwecke von Diensteanbieter und für die getrennte Verrechnung von Verbindungsleistungen für Verbindungen, die zwei oder mehrere Telekommunikationsnetze nutzen, **dadurch gekennzeichnet,**
**daß** ein Kunde die Rufnummer eines Diensteanbieters (12 bzw. E) über ein Endgerät (1-3) wählt, das über einen Anschluß (4a-6a) an das Telekommunikationsnetz (26) angeschaltet ist,
**daß** dem Kunden A vom Diensteanbieter (12 bzw. E) die nachgefragte, kostenpflichtige Information bereitgestellt wird,
**daß** die Verbindung (4-6) von der Einrichtung (7-9) zur Entgegennahme, zum Herstellen und zum Tarifieren lediglich für die vom Telekommuniktionsnetz bereitgestellte Verbindungsleistung, nicht jedoch für die Entgeltung des Diensteanbieters tarifiert wird,
**daß** Filtereinrichtungen (13-15) daraufhin programmiert werden, daß alle Verbindungen, die die Zielkennzahl eines Diensteanbieters haben, erkannt werden und die Verbindungsdaten wie Datum, Anfangs- und Endzeitpunkt sowie von welchem Anschluß diese Verbindung initialisiert worden ist, zu einer Registrier-/Sortiereinrichtung (19) übertragen werden,
**daß** die Registrier-/Sortiereinrichtung (19) alle Verbindungen zum Ziel bzw. Diensteanbieter nach den Ursprungsanschlüssen, von denen die Anrufe ausgegangen sind, ordnet,
**daß** je nach Ursprungsanschluß/Ursprungsanschlüssen zugeordnete(n) Verbindungsliste(n) an eine Zuordnungseinrichtung (20) weitergeleitet wird/werden und
**daß** danach die Zuordnungseinrichtung (20) für jeden Ursprungsanschluß (4a-6a) den Namen des Anschlußkunden und dessen Rechnungsanschrift bei der/den Kunden-Anschlußdatenbank(en) (25) automatisiert nachfragt und die so vervollständigte Liste an eine Ausgabeeinrichtung (21) übertragen wird, die die vervollständigten Listen zum Ausdrucken bzw. Weiterleiten speichert bzw. bereithält.

2. Verfahren nach Patentanspruch 1, **dadurch gekennzeichnet,**
**daß** die Ausgabeeinrichtung (21) die vollständige(n) Liste(n) zur Übersendung per Brief an den Diensteanbieter bereitstellt, der anhand dieser Liste(n), dem Kunden die nachgefragte kostenpflichtige Informationsleistung in Rechung stellt.

3. Verfahren nach Patentanspruch 1, **dadurch gekennzeichnet,**
**daß** die vollständige(n) Liste(n) über elektronische Übermittlungswege an den Diensteanbieter (12 bzw. E) übertragen werden, der anhand dieser Liste dem Kunden die nachgefragte, kostenpflichtige Informationsleistung in Rechnung stellt.

4. Verfahren nach Patentanspruch 1, **dadurch gekennzeichnet,**
**daß** die Ausgabeeinrichtung (21) die vollständige(n) Liste(n) zur Erbringung einer Inkassoleistung des Telekommunikationsbetreibers im Auftrag des Diensteanbieters bereithält bzw. speichert,
**daß** der Telekommunikationsdiensteanbieter die nachgefragten kostenpflichtigen Informationsleistungen getrennt aufführt, aber zusammen mit dem Rechnungsbetrag für die vom Kunden in Anspruch genommenen, im Telekommunikationsnetz (26) erbrachten Verbindungsleistungen in Rechnung stellt und
**daß** der vom Telekommunikationsbetreiber vom Kunden inkassierte Betrag für die kostenpflichtigen Informationsleistungen an den Diensteanbieter (12 bzw. E) überwiesen werden.

5. Verfahren nach Patentanspruch 1, **dadurch gekennzeichnet,**
**daß** die Filtereinrichtung (13) so programmiert wird, daß alle Verbindungen, die als eine bestimmte Zielkennzahl (zum Beispiel 0211/9876543) erkannt werden und die Verbindungsdaten wie Datum, Anfangs- und Endzeitpunkt sowie von welchem Anschluß diese Verbindung initialisiert worden ist, erkennt und zur Registrier-/Sortiereinrichtung (19) übertragen werden,
**daß** die Filtereinrichtung (13) erkennt, wenn Verbindungen von Anschlüssen generiert werden, die sich im gleichen räumlichen Bereich des Telekommunikationsnetzes (26) befinden wie der Zielanschluß und
**daß dadurch** die Filtereinrichtung (13) automatisch die bereichsidentifizierende Ziffernfolge (hier 0211 oder im Telefonnetz der Deutschen Telekom die betreffende Ortsnetzkennzahl) der vom Kunden (A) gewählten Ziffernfolge automatisch voranstellt.

6. Verfahren nach Patentanspruch 1, **dadurch gekennzeichnet,**
**daß** mehrere Diensteanbieter, die dienstpflichtige Dienste über das Telekommunikationsnetz (26) anbieten, diese dem jeweiligen Telekommuniktionsnetzbetreiber mitteilen, daß dieser daraufhin die entsprechenden Zielrufnummern in den Filtereinrichtungen (13-15) einstellt bzw. programmiert,
**daß** die Filtereinrichtungen (13-15) die Ursprungsanschlüsse, von denen Anrufe ausgehen, erkennen und
**daß** eine Sperrfunktion in der Software der Filtereinrichtungen (13-15) installiert ist, wodurch automatisch Verbindungen von bestimmten Ursprungsanschlüssen zu allen oder zu bestimmten kostenpflichtigen Zielrufnummern im Telekommuniktionsnetz (26) nicht durchgeschaltet werden.

7. Verfahren nach einem der Patentansprüche 1 oder 4 bis 6, **dadurch gekennzeichnet,**
**daß** bei einer entsprechend vorliegenden Sperrmeldung Verbindungen über einen Anschluß (zum Beispiel 6A) zu kostenpflichtigen Zielen nicht hergestellt werden, bis auf Widerruf die Sperrfunktion in der Filtereinrichtung (15) aktiviert bleibt.

8. Verfahren nach einem der Patentansprüche 1 bis 7, **dadurch gekennzeichnet,**
**daß** in den Fällen, in dem der Inhaber des Ursprungsanschlusses (4a oder 5a) wiederholt nachgefragte und erbrachte, in Rechnung gestellte, kostenpflichtige Dienstleistungen nicht bezahlt hat, die Sperrfunktion in den Filtereinrichtungen (13-15) auf Mitteilungen des Diensteanbieters vom Telekommuniktionsnetzbetreiber aktiviert wird.

9. Schaltungsanordnung zur Durchführung des Verfahrens nach einem der Patentansprüche 1 bis 8, **dadurch gekennzeichnet, dass** zwischen vorhandenen Anschlüssen (4a-6a) mit Endeinrichtungen (1-3) im Telekommunikationsnetzes (26) Einrichtungen (7-9) angeordnet sind, die derart ausgestaltet sind, dass sie die ausgelösten Aufträge für Verbindungen (4-6) entgegennehmen, herstellen und tarifieren, dass Filtereinrichtungen (13-15) angeordnet sind, die derart ausgestaltet sind, dass sie alle Verbindungen zu Zieleinrichtungen (12) erkennen und deren charakterisierende Daten zwecks Registrierung in eine Registrier-/Sortiereinrichtung (19) über Datenwege (16-18) weiterleiten,
dass der Ausgang der Registrier/Sortiereinrichtung (19) über einen Datenweg (22) mit einer Zuordnungseinrichtung (20) verbunden ist, die derart ausgestaltet ist, dass sie die Kundenanschriften für alle von der Registrier-/Sortiereinrichtung (19) aufgeführten Ursprungsanschlüsse (4a-6a) bei einer oder mehreren Kunden-Anschlussdatenbank(en) (25) über Datenweg (24) nachfragt,
dass der Ausgang der Zuordnungseinrichtung (20) über einen Datenweg (23) mit einer Ausgabeeinrichtung (21) verbunden ist, die derart ausgestaltet ist, dass sie automatisch nach Kundenanschriften sortiert, alle über einen Ursprungsanschluss (4a-6a) erfolgten Verbindungen (4-6) mit den für eine Rechnungsstellung erforderlichen Daten auflistet und über verschiedene Ausgänge (27-29) automatisch Listen und Einzugsverfahren in Listenform oder elektronischer Form bereitstellt.

10. Schaltungsanordnung zur Durchführung eines der Verfahren nach den Patentansprüchen 1 bis nach Patentanspruch 9, **dadurch gekennzeichnet,**
**daß** die Filtereinrichtungen (13-15) mit Sperrvorrichtungen, in Software oder Hardware realisiert, ausgestattet sind.

11. Schaltungsanordnung zur Durchführung des Verfahrens nach einem der Patentansprüche 1 bis 8 nach Patentanspruch 9, **dadurch gekennzeichnet, dass** zwischen der Endeinrichtung eines Kunden (A) und dem Ziel (E) mehrere Telekommunikationsnetze (B-D) angeordnet sind, die Filtereinrichtungen (13-15), Datenwege (16-18), eine Registrier-/Sortiereinrichtung (19), eine Zuordnungseinrichtung (20) und eine Ausgabeeinrichtung (21) mit Ausgängen (27) aufweisen, wobei die Ausgabeeinrichtung (21) derart ausgebildet ist, dass sie über die Ausgänge (27) das Versenden der erstellten Listen per Briefpost oder elektronisch veranlasst oder Listen zur Wahrnehmung eines Inkassos durch den Telekommunikationsnetzbetreiber im Auftrag des Diensteanbieters bereitstellt.

12. Schaltungsanordnung nach Patentanspruch 9, **dadurch gekennzeichnet,**
**daß** anstelle der Zieleinrichtung (12) ein weiteres Telekommunikationsnetz (26 bzw. C, D) angeordnet ist.

13. Schaltungsanordnung zur Durchführung des Verfahren nach einem der Patentansprüche 1 bis 8 nach Patentanspruch 9, **dadurch gekennzeichnet, dass** die Filtereinrichtung (13-15) zusätzlich mit einer Tarifierungsfunktionalität ausgerüstet ist, die derart ausgebildet ist, dass über Tarifierungssignalwege (30-32) den Einrichtungen (7-9) signalisierbar ist, dass eine gewählte Verbindung nicht zu tarifieren ist,
dass Einrichtungen zur Inrechnungstellung (33-35) angeordnet sind, die derart ausgebildet sind, dass sie die weiteren Operationen übernehmen und über Datenwege (36-38) mit der Filtereinrichtung (13-15) verbunden sind, und dass die Einrichtungen zur Inrechnungstellung (33-35) außerdem über Datenwege (39-41) mit den Einrichtungen (7-9) verbunden sind.

14. Schaltungsanordnung nach einem der Patentansprüche 9 bis 13, **dadurch gekennzeichnet,**
**daß** die Filtereinrichtungen (13-15) einzeln oder über eine gemeinsame zentrale Eingabestelle programmierbar ausgestaltet sind.

## Claims

1. Method for the use of telecommunications networks for the purposes of service providers and for the separate billing of call services for calls using two or more telecommunications networks, **characterized in that**
a customer dials the call number of a service provider (12 / E) using a terminal device (1-3) connected to the telecommunications network (26) via an access line (4a-6a);
the customer A is provided by the service provider (12 / E) with the requested, payable information;
the call (4-6) is tariffed by the receiving, establishing and tariffing means (7-9) only for the connection service provided by the telecommunications network, but not for the payment of the service provider;
filter means (13-15) are programmed to the effect that all calls having the destination code of a service provider are detected and the call data, such as date, starting and finishing time as well as the access line from where said call was initialized, are transmitted to a registering/sorting means (19);
the registering/sorting means (19) arranges all calls to the destination / service provider according to the originating access lines from which the calls were made;
depending on originating access line(s), associated call lists(s) is/are forwarded to an association means (20) and
thereafter, for each originating access line (4a-6a), the association means (20) automatically requests from the customer access line database(s) (25) the name of the access line customer and his/her billing address and the thus completed list is transmitted to an output means (21), said output means (21) storing and/or holding ready the completed lists for printing and/or forwarding.

2. Method according to claim 1, **characterized in that**
the output means (21) holds ready the complete list(s) for sending by letter to the service provider, wherein, on the basis of said list(s), the service provider bills the customer for the requested payable information service.

3. Method according to claim 1, **characterized in that**
the complete list(s) are transmitted via electronic transmission paths to the service provider (12 / E), wherein, on the basis of said list, the service provider bills the customer for the requested payable information service.

4. Method according to claim 1, **characterized in that**
the output means (21) holds ready and/or stores the complete list(s) for rendering of a collection service by the telecommunications operator on behalf of the service provider;
the telecommunications service provider separately lists the requested payable information services, but invoices same together with the invoice amount for the connection services used by the customer and rendered within the telecommunications network (26) and
the amount collected from the customer by the telecommunications operator for the payable information services is transferred to the service provider (12 / E).

5. Method according to claim 1, **characterized in that**
the filter means (13) is programmed to the effect that all calls which are detected as a certain destination code (such as 0211/9876543) and the call data, such as date, starting and finishing time as well as the access line from where said call was initialized, are detected and transmitted to the registering/sorting means (19);
the filter means (13) detects when calls are generated from access lines located in the same geographical area of the telecommunications network (26) as the destination access line and
the filter means (13) thereby automatically prefixes the sequence of digits dialled by the customer (A) with the area-identifying sequence of digits (here 0211 or, in the telephone network of Deutsche Telekom, the corresponding local area code).

6. Method according to claim 1, **characterized in that**
a plurality of service providers offering payable services over the telecommunications network (26) notify the respective telecommunications network operator thereof, wherein the telecommunications network operator thereupon sets / programs the corresponding destination call numbers in the filter means (13-15);
the filter means (13-15) detect the originating access lines from which calls are made and
a blocking function is installed in the software of the filter means (13-15) whereby calls from certain originating access lines to all or some payable destination call numbers in the telecommunications network (26) are automatically not connected through.

7. Method according to any one of claims 1 or 4 to 6, **characterized in that**
when there is a corresponding blocking message, calls from an access line (such as 6A) to payable destinations are not established for as long as the blocking function in the filter means (15), until cancelled, remains activated.

8. Method according to any one of claims 1 to 7, **characterized in that**
in those cases in which the owner of the originating access line (4a or 5a) has repeatedly not paid for requested and rendered, invoiced, payable services, the blocking function in the filter means (13-15) is activated by the telecommunications network operator in response to notifications from the service provider.

9. Circuit arrangement for implementation of the method according to any one of claims 1 to 8, **characterized in that**
provided between existing access lines (4a-6a) with terminal devices (1-3) in the telecommunications network (26) are means (7-9) of such design that said means (7-9) receive, establish and tariff the initiated requests for call connections (4-6), wherein there are provided filter means (13-15) of such design that said filter means (13-15) detect all calls to destinations (12) and, via data paths (16-18), forward the characterizing data of said calls to a registering/sorting means (19) for the purpose of registration;
the output of the registering/sorting means (19) is connected via a data path (22) to an association means (20), said association means (20) being of such design that, via a data path (24), said association means (20) requests from one or more customer access line database(s) (25) the customer addresses for all originating access lines (4a-6a) listed by the registering/sorting means (19);
the output of the association means (20) is connected via a data path (23) to an output means (21), said output means (21) being of such design that said output means (21) lists, automatically sorted according to customer addresses, all the calls (4-6) made from an originating access line (4a-6a) with the data required for invoicing and, via various outputs (27-29), automatically makes available lists and direct debit procedures in list form or in electronic form.

10. Circuit arrangement according to claim 9 for implementation of any one of the methods according to claims 1 to 8, **characterized in that**
the filter means (13-15) are provided with blocking devices, realized in software or hardware.

11. Circuit arrangement according to claim 9 for implementation of any one of the methods according to claims 1 to 8, **characterized in that**
provided between the terminal device of a customer (A) and the destination (E) are a plurality of telecommunications networks (B-D) having filter means (13-15), data paths (16-18), a registering/sorting means (19), an association means (20) and an output means (21) with outputs (27), wherein the output means (21) is of such design that, via the outputs (27), said output means (21) initiates the sending of the generated lists by letter post or by electronic means or makes available lists for rendering of a collection service by the telecommunications network operator on behalf of the service provider.

12. Circuit arrangement according to claim 9, **characterized in that**
a further telecommunications network (26 / C, D) is provided instead of the destination (12).

13. Circuit arrangement according to claim 9 for implementation of any one of the methods according to claims 1 to 8, **characterized in that**
the filter means (13-15) is additionally provided with a tariffing functionality, said tariffing functionality being of such design that, via tariffing signal paths (30-32), the means (7-9) can be informed that a dialled call connection is not to be tariffed;
means for invoicing (33-35) are provided, said means for invoicing (33-35) being of such design that said means for invoicing (33-35) take over the further operations and are connected via data paths (36-38) to the filter means (13-15), wherein the means for invoicing (33-35) are additionally connected via data paths (39-41) to the means (7-9).

14. Circuit arrangement according to any one of claims 9 to 13, **characterized in that**
the filter means (13-15) are adapted to be programmed individually or via a common central input station.

## Revendications

1. Procédé destiné à l'utilisation de réseaux de télécommunications pour les besoins des prestataires de services et pour le décompte séparé de prestations de communication pour les communications utilisant deux ou plusieurs réseaux de télécommunications, **caractérisé en ce que**
un client compose le numéro d'appel d'un prestataire de services (12 ou E) par l'intermédiaire d'un raccordement terminal (1-3), ce dernier étant connecté au réseau de télécommunications (26) par l'intermédiaire d'un raccordement (4a-6a),
l'information payante demandée est mise à la disposition du client A par le prestataire de services (12 ou E),
la communication (4-6) est tarifiée par l'installation (7-9) pour la réception, l'établissement et la tarification, uniquement pour les prestations de communication mises à disposition par le réseau de télécommunications, mais par pour la rémunération du prestataire de services,
des dispositifs de filtrage (13-15) sont programmés afin que toutes les communications correspondant à l'indicatif de destination d'un prestataire de services soient détectées, les données de communication comme la date, l'heure de début et de fin ainsi que le raccordement à partir duquel cette communication a été initialisée, étant transmises à un dispositif d'enregistrement/de tri (19),
le dispositif d'enregistrement/de tri (19) classe toutes les communications relatives à la destination ou au prestataire de services selon les raccordements d'origine dont proviennent les appels,
la (les) liste(s) de communications classée(s) par raccordement(s) d'origine est (sont) transmise(s) à un dispositif d'affectation (20),
le dispositif d'affectation (20) demande ensuite pour chaque raccordement d'origine (4a-6a) automatiquement le nom du client du raccordement et son adresse de facturation auprès de la (des) banque(s) de données des raccordements (25), la liste ainsi complétée étant transmise à une installation de sortie (21) qui enregistre ou tient à disposition la liste complétée pour impression ou pour transfert.

2. Procédé selon la revendication 1, **caractérisé en ce que**
l'installation de sortie (21) met à disposition la (les) liste(s) complète(s) pour envoi par courrier au prestataire de services, celui-ci facturant au client, à l'aide de cette liste (ces listes), la prestation d'information payante demandée.

3. Procédé selon la revendication 1, **caractérisé en ce que**
La (les) listes complètes est (sont) transmise(s) par voie électronique au prestataire de services (12 ou E), qui, à l'aide de ladite liste, facture au client la prestation d'information payante demandée.

4. Procédé selon la revendication 1, **caractérisé en ce que**
l'installation de sortie (21) enregistre ou tient à disposition la (les) liste(s) complète(s) pour permettre à l'opérateur de télécommunications d'apporter une prestation de recouvrement pour le compte du prestataire de services,
le prestataire de services de télécommunications indique séparément les prestations d'information payantes demandées, mais les facture conjointement avec le montant de la facture des prestations de communications rendues dans le réseau de télécommunications (26) et utilisées par le client et
le montant encaissé auprès du client par l'opérateur de télécommunications pour les prestations d'information payantes est viré au prestataire de services (12 ou E).

5. Procédé selon la revendication 1, **caractérisé en ce que**
le dispositif de filtrage (13) est programmé de sorte que toutes les communications étant identifiées comme ayant un indicatif de destination défini (par exemple 0211/9876543) et les données de communication comme la date, l'heure de début et de fin ainsi que le raccordement à partir duquel cette communication a été initialisée sont identifiées et transmises au dispositif d'enregistrement/de tri (19),
le dispositif de filtrage (13) identifie si les communications sont générées par des raccordements qui se trouvent dans la même zone locale du réseau de télécommunications (26) que le raccordement de destination,
le dispositif de filtrage (13) fait ainsi automatiquement précéder la série de chiffres composée par le client de la série de chiffres identificatrice de zone (ici 0211 ou l'indicatif local concerné dans le réseau téléphonique de Deutsche Telekom).

6. Procédé selon la revendication 1, **caractérisé en ce que**
plusieurs prestataires de services proposant des services obligatoires par l'intermédiaire du réseau de télécommunications (26) déclarent ceux-ci au prestataire du réseau de télécommunications concerné, de sorte que celui-ci introduit ou programme alors les numéros d'appels de destination en question dans les dispositifs de filtrage (13-15),
les dispositifs de filtrage (13-15) identifient les raccordements d'origine dont proviennent les appels et
une fonction de blocage est installée dans le logiciel des dispositifs de filtrage (13-15), assurant qu'il ne soit pas automatiquement établi des communications à partir de certains raccordements d'origine en direction de tous ou de certains numéros d'appel de destination payants dans le réseau de télécommunications (26.

7. Procédé selon l'une des revendications 1 ou 4 à 6, **caractérisé en ce qu'**en cas de demande de blocage, la fonction de blocage assurant qu'il ne soit pas établi de communications d'un raccordement (par exemple 6A) vers des destinations payantes reste activée dans le dispositif de filtrage (15) jusqu'à révocation.

8. Procédé selon l'une des revendications 1 à 7, **caractérisé en ce que**
dans les cas où le titulaire du raccordement d'origine (4a ou 5a) n'a à plusieurs reprises pas payé les prestations de services payantes demandées, exécutées et facturées, la fonction de blocage est activée dans les dispositifs de filtrage (13-15) par l'opérateur du réseau de télécommunications sur notifications du prestataire de services.

9. Montage de circuits destiné à l'exécution du procédé selon l'une des revendications 1 à 8, **caractérisé en ce que**
des dispositifs (7-9) configurés de telle manière qu'ils réceptionnent, établissent et facturent les demandes déclenchées pour les communications (4-6) sont disposés entre les lignes existantes (4a-6a) dotées d'équipements terminaux (1-3) dans le réseau de télécommunications (26),
des dispositifs de filtrage (13-15) sont installés, lesquels sont configurés de telle manière qu'ils identifient toutes les communications vers des installations de destination (12) et transmettent pour enregistrement leurs données caractéristiques par voies de données (16-18) vers un dispositif d'enregistrement/de tri (19),
la sortie du dispositif d'enregistrement/de tri (19) est reliée par une voie de données (22) à un dispositif d'affectation (20) configuré de telle manière qu'il demande par voie de données (24) les adresses de dients pour tous les raccordements d'origine (4a-6a) enregistrés par le dispositif d'enregistrement/de tri (19) auprès d'une ou de plusieurs banques de données de raccordements de clients (25),
la sortie du dispositif d'affectation (20) est reliée par une voie de données (23) à une installation de sortie (21), configurée de telle manière qu'elle répertorie, en les triant automatiquement selon les adresses de clients, toutes les communications (4-6) effectuées par l'intermédiaire d'un raccordement d'origine (4a-6a) avec les données nécessaires à l'établissement de la facture et qu'elle met automatiquement à disposition, par l'intermédiaire de sorties différentes (27-29), des listes et des procédés de prélèvement sous forme de listes ou sous forme électronique.

10. Montage de circuits selon la revendication 9 destiné à l'exécution d'un des procédés selon l'une des revendications 1 à 8, **caractérisé en ce que** les dispositifs de filtrage (13-15) sont équipés de dispositifs de blocage réalisés sous forme de logiciel ou de matériel.

11. Montage de circuits selon la revendication 9 destiné à l'exécution du procédé selon l'une des revendications 1 à 8, **caractérisé en ce qu'**entre l'équipement terminal d'un client (A) et la destination (E), sont disposés plusieurs réseaux de télécommunications (B-D), présentant des dispositifs de filtrage (13-15), des voies de données (16-18), un dispositif d'enregistrement/de tri (19), un dispositif d'affectation (20) et une installation de sortie (21) avec des sorties (27), ladite installation de sortie (21) étant configurée de telle manière qu'elle déclenche par les sorties (27) l'envoi des listes dressées par courrier postal ou par voie électronique ou met des listes à disposition pour permettre à l'opérateur de télécommunications d'effectuer un recouvrement pour le compte du prestataire de services.

12. Montage de circuits selon la revendication 9, **caractérisée en ce qu'**un autre réseau de télécommunications (26 ou C, D) est disposé à la place de l'installation de destination (12).

13. Montage de circuits selon la revendication 9 destiné à l'exécution du procédé selon l'une des revendications 1 à 8, **caractérisée en ce que**
le dispositif de filtrage (13-15) est équipé en supplément d'une fonctionnalité de tarification configurée de telle manière qu'il soit possible de signaler aux dispositifs (7-9), par l'intermédiaire de voies de signalisation de tarification (30-32), qu'une communication ne doit pas être tarifiée,
des dispositifs d'établissement de factures (33-35) sont mis en place, configurés de telle manière qu'ils reprennent les autres opérations et sont reliés par voies de données (36-38) au dispositif de filtrage (13-15) et que lesdits dispositifs d'établissement de factures (33-35) sont reliés en outre par voies de données (39-41) aux dispositifs (7-9).

14. Montage de circuits selon l'une des revendications 9 à 13, **caractérisée en ce que** les dispositifs de filtrage (13-15) sont programmables individuellement ou par l'intermédiaire d'un point d'entrée central commun.
